# EUROPÄISCHE PATENTSCHRIFT

(11) **EP 1 388 491 B1**
(45) Veröffentlichungstag und Bekanntmachung des Hinweises auf die Patenterteilung: **30.09.2009**
(21) Anmeldenummer: 03017467.6
(22) Anmeldetag: 01.08.2003
(51) Int. Cl.: B62M 25/02

(54) **Seilzugverbindung**
Cable connection
Tirant à câble

(30) Priorität: 08.08.2002 DE 10236276; 23.07.2003 DE 10333360
(43) Veröffentlichungstag der Anmeldung: 11.02.2004
(73) Patentinhaber: SRAM Deutschland GmbH, 97404 Schweinfurt (DE)
(72) Erfinder: Steuer, Werner, 97424 Schweinfurt (DE); Kainzner, Peter, 97422 Schweinfurt (DE); Pehse, Gunter, 97464 Niederwerrn (DE)

(56) Entgegenhaltungen:
- DE-A1- 4 007 954
- DE-C- 719 512
- DE-U1- 8 910 999
- FR-A- 780 002
- US-A- 2 296 993
- US-A- 2 416 206
- US-A- 2 890 066
- US-A- 4 218 935
- US-B1- 6 324 938
- US-B1- 6 349 614

## Beschreibung

Die vorliegende Erfindung betrifft eine Verbindungsvorrichtung zur Kopplung des von der Schaltbetätigung kommenden Seilzuges mit dem Schaltzug einer Fahrradnabe, insbesondere einer Getriebenabe mit integriertem System zur Erzeugung von Schaltwegen gemäß dem Oberbegriff des Patentanspruches 1.

Beim Aus- und Einbau des Antriebsrades ist auch das Trennen und Verbinden des Seilzuges von der Getriebenabe erforderlich. Dies wird mittels einer gut zugängigen lösbaren Verbindungsvorrichtung außerhalb der Nabe bewerkstelligt.

Eine gattungsgemäße Verbindungsvorrichtung in Form eines Gehäuses ist aus der EP 0 805 104 A2 bekannt. Diese zeigt ein Gehäuse für die Aufnahme eines Schaltzuges zum Anbau an eine Mehrgangnabe im Hinterrad eines Fahrrades mit einem Schaltrad, das koaxial zur Nabenachse am Ende der Nabe angeordnet ist. Das Gehäuse besteht aus einem Antriebsgehäuse zur Abdeckung des Schaltrades, das die lineare Bewegung des Schaltzuges in eine drehende Schaltbewegung umformt und einem rohrförmigen Gehäusefortsatz zur Aufnahme des Schaltzuges und des von der Schaltbetätigung kommenden Seilzuges. Antriebsgehäuse und Gehäusefortsatz der Verbindungsvorrichtung sind über ein Gelenk verbunden, das an einer am Antriebsgehäuse angeordneten Schaltzugführung angelenkt ist. Der Gehäusefortsatz ist röhrenförmig und besitzt eine von einem Klappdeckel abgedeckte Öffnung und ein Befestigungselement zur Abstützung am Unterzug des Fahrradrahmens.

Die Verbindungsvorrichtung besteht aus einem Federspeicherelement, in dem auf der einen Seite der Schaltzug eingehängt ist und auf der anderen Seite befindet sich eine Einhängenase mit einer Kontur zur Aufnahme eines geeignet geformten Kupplungsstückes, an dem der Seilzug angeklemmt ist. Die Feder im Federspeicher speichert die Schaltenergie bis im Getriebe die erforderliche Schaltbereitschaft vorliegt und führt dann den Schaltvorgang aus. Die Seilhülle des Seilzuges stützt sich im montierten Zustand über eine Einstellschraube am Gehäusefortsatz ab.

Zum Lösen der Verbindungsvorrichtung wird die Schaltposition mit der niedrigsten Seilzugspannung eingestellt. Der Klappdeckel am Gehäusefortsatz wird aufgeklappt, der Federspeicher mit dem eingehängten Kupplungsstück herausgenommen und beide voneinander getrennt. Der Federspeicher verbleibt am Gehäusefortsatz und damit am Antriebsrad, während die Seilhülle mit der Einstellschraube und der Seilzug mit dem Kupplungsstück am Fahrradrahmen verbleiben.

Eine weitere Verbindungsvorrichtung für Schalt- und Seilzug wird in der Patentschrift US 6 349 614 B1 beschrieben. Auch hier geht das an der Nabe anliegende Gehäuse zur Führung des Schaltzuges und zur Aufnahme der Seilhülle in einen Rohrfortsatz über. Das andere Ende der Seilhülle wird von einer klammerartigen Haltevorrichtung aufgenommen, die den erforderlichen Bauraum für die Verbindungsvorrichtung von Schalt- und Seilzug und eine weitere Aufnahme zur Abstützung der Seilhülle des von der Schaltbetätigung kommenden Seilzuges bereitstellt.

Die Verbindung von Schalt- und Seilzug erfolgt mittels eines lösbaren Schraub- oder Bajonettverschlusses. Die entsprechenden Teile des Verschlusses sind an den Enden des Schalt- bzw. Seilzuges angeklemmt. Zum Lösen dieser Verbindungsvorrichtung wird ebenfalls die Schaltstellung mit der geringsten Seilzugspannung eingestellt und der Schraub- bzw. Bajonettverschluß durch Verdrehen der entsprechenden Bauteile geöffnet. Dabei befinden sich die Verschlußteile innerhalb der in einem Teilbereich offenen Haltevorrichtung. Da die Verschlußteile in der offenen Haltevorrichtung nicht geschützt sind, ist eine Abdichtung der sich beim Schaltvorgang verschiebenden Züge und ein Schutz der Verschlußteile unumgänglich. Der Seilzug mit dem dazugehörenden Verschlußteil und die Seilhülle kann aus der geschlitzten Aufnahme an der Haltevorrichtung herausgenommen werden. Bei der Demontage des Antriebsrades verbleibt das Gehäuse mit dem Schaltzug und die Seilhülle mit der Haltevorrichtung am Rad, während der Seilzug mit seiner Seilhülle am Fahrradrahmen zurückbleibt.

Die in den beiden Schutzrechten gezeigten Verbindungsvorrichtungen verfügen beide über ein Halteelement zum Aufnehmen der Seilhüllen und zur Bereitstellung des Bauraumes für die beweglichen Verschlußteile. Zum Verbinden bzw. Lösen des Seilzuges mit dem Schaltzug muß die Seilverbindung entweder umständlich aus dem Gehäusefortsatz herausgenommen oder in der Haltevorrichtung gegeneinander verdreht werden. Die Verbindungsvorrichtung mit dem Gehäusefortsatz beansprucht relativ viel Bauraum und ist im Falle eines Radwechsels umständlich zu handhaben, da der Klappdeckel geöffnet und die Seilverbindung zum Lösen herausgenommen und ausgehängt werden muß. Die Verbindungsvorrichtung mit der offenen Haltevorrichtung ist, da sie sich in unmittelbarer Nähe der Kette befindet, sehr schmutzanfällig und trotz der offenen Haltevorrichtung wird das Verdrehen des Bajonettverschlusses behindert. Auch hier wird die Handhabung des demontierten Rades durch den an der Nabe verbleibenden abstehenden Schaltzug bzw. Schaltzughülle beeinträchtigt.

Die Patentschrifft FR 780 002 offenbart einen Gegenstand gemäß dem Oberbegriff von Anspruch 1.

Aufgabe der Erfindung ist es, eine Verbindungsvorrichtung zwischen z. B. Seilzug und Nabe mit integriertem System zur Erzeugung von Schaltwegen zu schaffen, die am Fahrrad innerhalb der Ausfallenden Platz findet und beim Radwechsel leicht mit einer Hand trennbar ist. Diese Verbindungsvorrichtung soll klein bauen und am demontierten Rad nicht über das Ritzel hinausragen. Zudem soll die Korrektur der Schaltwegeinstellung einfach und an einer gut zugänglichen Stelle möglich sein. Die Verbindungselemente sind gegen Verschmutzung und Umwelteinflüsse zu schützen.

Die Lösung dieser Aufgabe wird, gemäß den kennzeichnenden Merkmale der Patentansprüche, im wesentlichen durch eine Verbindungshülse erreicht, die einerseits die Seilkupplungselemente umschließt und andererseits als Gegenlager für die Seilzughülle dient. Diese Verbindungshülse ist mittels einer vorzugsweise gelenkigen Anbindung formschlüssig mit dem schaltzugführenden Führungsabschnitt des auf die Nabe aufgesteckten Gehäuseteiles verbunden. Die Seilkupplung besteht aus jeweils einem am Schaltzug und am Seilzug befestigten Nippel mit je einer Seilklemmzone und einem radial fügbaren Kupplungsabschnitt.

Die vorgeschlagene Seilzugverbindung benötigt gegenüber den, in den vorgenannten Schutzrechten vorgestellten Verbindungsvorrichtungen, weniger Bauraum und ist aufgrund der radialen Fügeverbindung der Seilnippel schnell und sehr einfach mit einer Hand montierbar.

Die Verbindungsvorrichtung besteht aus zwei Hauptkomponenten, dem Gehäuseteil und der Verbindungshülse. Das Gehäuseteil wird axial über die Achse auf die Nabe aufgesteckt und beinhaltet eine Seilspule zum Umformen der linearen Schaltzugbewegung in eine Drehbewegung, die mittels einer Kupplungskontur formschlüssig ins Getriebe eingeleitet wird. Am Gehäuse ist zur Erkennung der aktuellen Schaltzugeinstellung ein Fenster vorgesehen. Am Gehäuseteil befindet sich ein Führungsabschnitt zur Aufnahme des Schaltzuges und zur formschlüssigen Verbindung mit der Verbindungshülse. Dieser Abschnitt verfügt im Endbereich außen über eine spezielle Haltekontur, die neben einer sicheren Verbindung mit der Einlegekontur an der Verbindungshülse, bei Bedarf auch noch einen definierten Bewegungswinkel zwischen Gehäuseteil und Verbindungshülse zuläßt.

Der Schaltzug ist mit einem Ende an der Seilspule befestigt und trägt am anderen Ende einen Nippel mit einer Einhängekontur. Die Rückstellfeder zum Vorspannen der Seilspule befindet sich im Nabengetriebe und zieht den Schaltzug mit dem Schaltzugnippel bis zum Anschlag an den röhrenförmigen Führungsabschnitt des Gehäuseteils. Der Schaltzugnippel wird mit dem Schaltzug verklemmt und verfügt neben der Einhängekontur noch über eine zylindrische Verlängerung in Richtung Schaltzug. Diese Verlängerung taucht im aufgespulten Zustand des Schaltzuges in die entsprechende Bohrung im Führungsabschnitt des Gehäuseteiles ein und sorgt somit für eine radial steife Führung des Schaltzugnippels während des Verbindungsvorganges mit dem Seilzugnippel.
Zur Feineinstellung des Schaltzuges verfügt der Führungsabschnitt über ein Verstellgewinde, um durch Verdrehen des Führungsabschnittes gegenüber dem Gehäuseteil den Schaltzug zu spannen oder zu Entlasten, bis die Markierung an der Seilspule mit der Markierung am Gehäuseteil im Einstellfenster übereinstimmt.

Die Verbindungshülse ist ein röhrenförmiges Bauteil und nimmt den Seilzug mit dem Seilzugnippel auf. Der Seilzugnippel und damit auch der freigegebene Seilzug wird mittels einer Druckfeder gegen einen Endanschlag in der Verbindungshülse gedrückt. Dabei stützt sich die Druckfeder am Einstellelement ab, das eine Aufnahme für die Seilzughülle und ein Verstellgewinde aufweist. Über das Verstellgewinde läßt sich der Seilzug durch Verdrehen des Einstellelementes gegenüber der Verbindungshülse axial verschieben und somit eine genaue Schalteinstellung justieren. Die aktuelle Schaltzugeinstellung ist im Einstellfenster an der Stellung der Markierungen am Gehäuseteil und der Seilspule zu erkennen.

Der Seilzugnippel wird ebenfalls mit dem Seilzug verklemmt und verfügt über eine auf die Kontur des Schaltzugnippels abgestimmte Fügekontur. Der Seilzugnippel und die Verbindungshülse haben eine radiale Einlegeöffnung zur Aufnahme des Schaltzugnippels. Damit sich die Verbindungshülse und der Seilzugnippel nicht gegeneinander verdrehen und eventuell die Einlegekontur am Seilzugnippel verdecken, ist eine Verdrehsicherung in Form eines nicht runden, z. B. Vieleckquerschnittes vorgesehen. Somit ist gewährleistet, dass die Fügekontur am Seilzugnippel und die Einlegeöffnung an der Verbindungshülse stets zueinander ausgerichtet sind und sich nicht gegenseitig verdecken bzw. verdrehen.

In einer Ausführungsalternative können die Koppelelemente vertauscht angeordnet werden, so dass sich zum einen die radiale Einlegeöffnung und die Einlegekontur sowie das Innenprofil mit dem dazugehörenden mit einer Fügekontur ausgestatteten Nippel im bzw. am Führungsabschnitt befindet und zum anderen der Seilzugnippel und die Verbindungshülse mit entsprechenden Einhängekonturen versehen sind.

Sind die Nippel zusammengefügt, so wird die Einlegeöffnung durch eine axial verschiebbare Schiebehülse verschlossen. Die Schiebehülse schützt die Nippelkonturen gegen Verschmutzung und kann mit elastischen Dichtungen ausgestattet sein. Sie wird mittels einer elastischen Rastvorrichtung in der Schließstellung axial auf der Verbindungshülse fixiert. Eine weitere Ausgestaltung der lösbaren Kopplung beinhaltet eine Verschiebung und Positionierung der Schiebehülse in Richtung Schließstellung mittels Federkraft.

Beim Radwechsel bzw. zum Öffnen der Verbindungsvorrichtung wird die Schaltstellung mit der geringsten Seilspannung an der Schaltbetätigung eingelegt, da die Seilzug-Nabenverbindung in einer anderen Schaltposition nicht, bzw. nur mit Kraftaufwand trennbar ist. Wird nun diese Montage-Schaltstellung gewählt, so fährt zum einen der Seilzugnippel mit Hilfe der Druckfeder gegen den Endanschlag in der Verbindungshülse und zum anderen wird der Schaltzugnippel durch den federvorgespannten Schaltzug am Führungsabschnitt zum Anschlag gebracht. Die Schiebehülse auf der Verbindungshülse wird über die Rastvorrichtung oder gegen eine axial wirkende Federkraft in Richtung Einstellelement verschoben und somit die Einlegeöffnung freigegeben. Die Verbindungshülse kann nun am Führungsabschnitt radial ausgeklinkt werden. Das Gehäuseteil verbleibt nach der Demontage des Antriebsrades an der Nabe und der Seilzug mit der Verbindungshülse am Fahrradrahmen.

Zur Vereinfachung der Schalt- und Seilzugjustierung bei der Erstmontage, oder nach einem erforderlichen Seilzugwechsel, sind zur Erkennung der entsprechenden Einstellmarken sowohl im Gehäuseteil als auch in der Verbindungshülse Sichtöffnungen vorgesehen. Die Schaltzugjustierung erfolgt durch Ein- bzw. Ausschrauben des Führungsabschnittes am Gehäuseteil bis die Stellung der Markiermarke an der Seilspule mit der ortsfesten Markierung im Einstellfenster übereinstimmt. Die Seilzugjustierung wird durch Verdrehen des Einstellelementes relativ zur Verbindungshülse eingeleitet und ist abgeschlossen, wenn eine Markierung am Seilzugnippel z. B. die Klemmschraube voll in der Sichtöffnung an der Verbindungshülse erscheint.

Die Komponenten der lösbaren Koppelvorrichtung sind nach der erfolgreichen Erstmontage fein aufeinander abgestimmt. Insbesondere die Fügekontur am Seilzugnippel mit der Einhängekontur am Schaltzugnippel sowie die Einlegekontur der Verbindungshülse mit der Kontur am Führungsabschnitt sind quasi spielfrei ausgeführt, so dass beim Lösen und Wiederverbinden, z. B. zur Reifenmontage, keine Veränderung der Seileinstellung bzw. der Schaltjustierung auftritt.

In einer weiteren Ausführung der Erfindung ist vorgesehen, die Verbindung zwischen Führungsabschnitt und Verbindungshülse oder zwischen Führungsabschnitt und Schiebehülse als Bajonettverschluß auszubilden. Dabei wird die Verbindung von Seilzugnippel und Schaltzugnippel, nach Öffnung des Bajonettverschlusses, durch eine radial gerichtete Lösebewegung getrennt. Hierzu ist am Seilzugnippel eine radiale Fügekontur und am Schaltzugnippel eine entsprechende Einhängekontur vorgesehen. Bei Anliegen der Schaltkraft, wenn z. B. der Seil- und Schaltzug unter Spannung steht, ist der Bajonettverschluß nur mit erheblichem Kraftaufwand zu lösen.

Diese erfinderische Seilzugverbindung ist nicht nur auf eine Anwendung im Fahrradbereich beschränkt, sondern kann in modifizierter Ausführung überall dort eingesetzt werden, wo eine definierte, gleichbleibende Seillänge erforderlich ist, die sich aus zwei einfach zu lösenden Komponenten, insbesondere einem Führungsabschnitt und einer Verbindungshülse zusammensetzt.

### Kurzbeschreibung der Zeichnung

Die vorliegende Erfindung wird mit Bezug auf die beigefügten Zeichnungen detailliert beschrieben, wobei die Zeichnungen lediglich als nicht beschränkendes Beispiel anzusehen sind. Es wird ein Ausführungsbeispiel zur weiteren Erläuterung der Erfindungsmerkmale gezeigt:
- Fig. 1: zeigt die Anbindung der Verbindungsvorrichtung an die Getriebenabe in 3D
- Fig. 2: zeigt die Seilzugverbindung im Längsschnitt
- Fig. 3: zeigt zwei um 90° versetzte Längsschnitte der Verbindungshülse
- Fig. 4: zeigt die Seilzugverbindung im gelösten Zustand
- Fig. 5: zeigt zwei um 90° versetzte Längsschnitte der Verbindungshülse mit Sichtöffnung
- Fig. 6: zeigt die Seilzugverbindung im Längsschnitt mit dem Einstellfenster und der Sichtöffnung

### Beschreibung der bevorzugten Ausführungsbeispiele

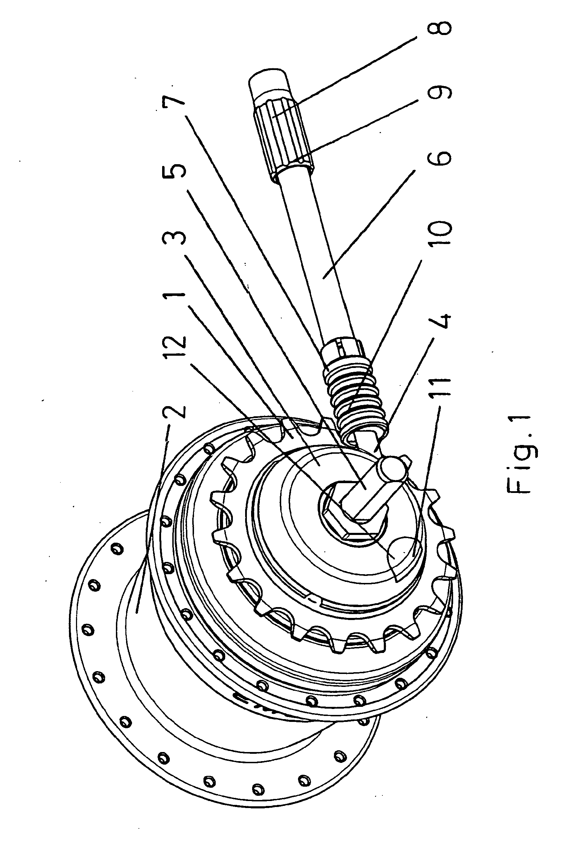

Figur 1 zeigt eine 3-D-Darstellung der geschlossenen Verbindungsvorrichtung im montierten Zustand mit dem Ritzel 1 und der Getriebenabe 2. Hierbei sitzt das Gehäuseteil 3 mit dem Führungsabschnitt 4 auf der feststehenden Achse 5. Die Verbindungshülse 6 und die Schiebehülse 7 umschließen den Endbereich des Führungsabschnittes 4 und sichern somit eine in Längsrichtung stabile Anbindung des hier nicht dargestellten Seilzuges bzw. der Seilzughülle, die vom Einstellelement 8 aufgenommen wird. Das Einstellelement 8 ist mit einem Verdrehprofil 9 und die Schiebehülse 7 mit einem Verschiebeprofil 10 ausgestattet. Ein durchsichtiger Dekkel 11 verschließt das Einstellfenster 12 im Gehäuseteil 3. Im Einstellfenster 12 ist eine Markierung auf der Seilspule und am Gehäuseteil 3 erkennbar. Durch Verdrehen des Einstellelementes 8 an der Verbindungshülse 6 kann die Markierung an der Seilspule und am Gehäuseteil 3 zueinander ausgerichtet und somit die Schaltung bei Bedarf eingestellt bzw. nachgestellt werden.

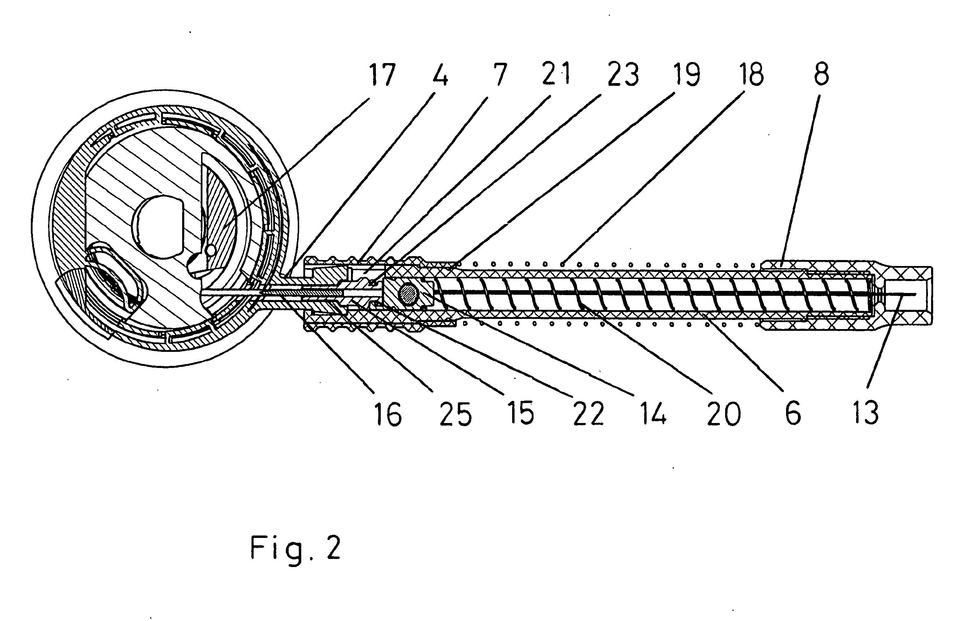

In Figur 2 wird die komplette Seilzugverbindung im Längsschnitt gezeigt. Die lineare Schaltbewegung wird durch den Seilzug 13 in die Verbindungshülse 6 eingeleitet und vom Seilzugnippel 14 auf den Schaltzugnippel 15 übertragen. Über den im Führungsabschnitt 4 geführten Schaltzug 16 wird die Schaltbewegung zur Seilspule 17 geleitet und dort in eine Drehbewegung umgeformt und ins Nabengetriebe eingeleitet. Die Seilzughülle wird vom Einstellelement 8 aufgenommen und die Seilzugspannung bzw. die Schalteinstellung durch Verdrehen des Einstellelementes 8 gegenüber der Verbindungshülse 6 justiert. Am anderen Ende der Verbindungshülse 6 befindet sich die Schiebehülse 7, die mittels einer Schraubenfeder 18 in die Schließstellung geschoben und dort von einer Rastkontur 19 bzw. von einer elastischen Rastvorrichtung gehalten wird. Zum Lösen der Seilzug-Nabenverbindung muß der Gang mit der geringsten Seilzugspannung, die Montage-Schaltstellung eingelegt werden. Der Seilzug 13 bzw. der Seilzugnippel 14 wird von der Druckfeder 20, die sich am Einstellelement 8 abstützt, gegen einen Endanschlag der Verbindungshülse 6 gedrückt und in die Grundstellung gebracht. Auf der Gehäuseteilseite wird der federvorgespannte Schaltzug 16 bzw. der Schaltzugnippel 15 gegen einen Anschlag im Führungsabschnitt 4 gezogen und damit ebenfalls in die Grundstellung gebracht. Nun wird die Schiebehülse 7 zurückgeschoben und die radiale Einlegeöffnung 21 an der Verbindungshülse 6 freigegeben. Die Verbindungshülse 6 mit dem Seilzugnippel 14 wird gegenüber dem Führungsabschnitt 4 bzw. dem Schaltzugnippel 15 in radialer Richtung verschoben und damit die Seilzug-Nabenverbindung getrennt. Beim Ausbau des Antriebsrades verbleibt das Gehäuseteil 3 mit der Seilspule 17 und dem Schaltzug 16 am Antriebsrad und die Verbindungshülse 6 und der Seilzug 13 am Fahrradrahmen. Damit die radiale Einlegeöffnung 21 an der Verbindungshülse 6 immer mit der radialen Fügekontur 22 des Seilzugnippels 14 übereinstimmt, sind beide mit einem nicht runden Querschnitt, z. B. in Form eines Sechskantprofiles ausgestattet. Die radiale Fügekontur 22 am Seilzugnippel 14 und die Einhängekontur 23 am Schaltzugnippel 15 sind entsprechend aufeinander abgestimmt, so dass im zusammengefügten Zustand eine nahezu spielfreie Zugverbindung entsteht. Der Schaltzugnippel 15 besitzt neben der radial ausgeprägten Einhängekontur 23 noch eine zylindrische Verlängerung 25, die sich während des Verbindungsvorganges der Verbindungshülse 6 mit dem Führungsabschnitt 4 in der entsprechend angepaßten Bohrung im Führungsabschnitt 4 abstützt.

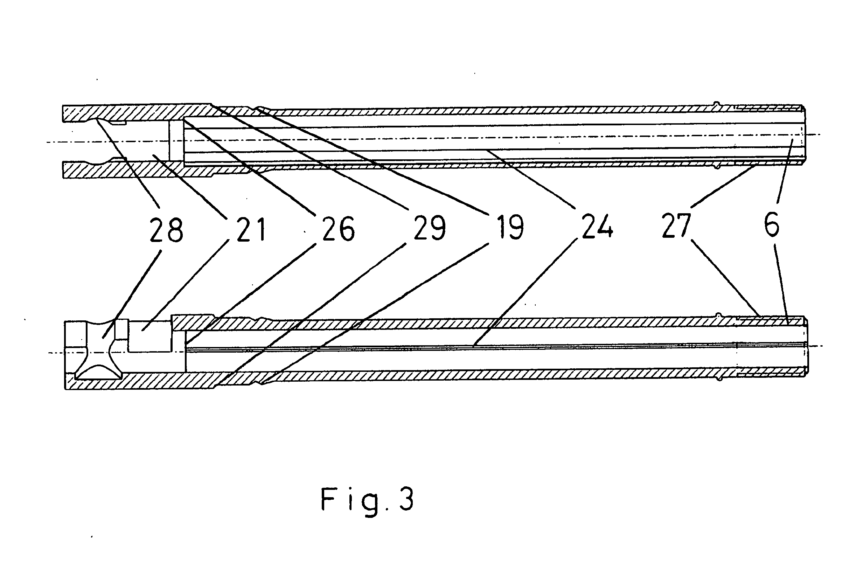

In Figur 3 werden zur Verdeutlichung des Aufbaus der Verbindungshülse 6 zwei Längsschnitte gezeigt. Zur Verdrehsicherung des Seilzugnippels verfügt die Verbindungshülse 6 über ein Innenprofil 24 in Form eines Innensechskantprofiles. Die Verbindungshülse 6 ist mit einer Anschlagkante 26 ausgestattet, die eine definierte Endposition des Seilzugnippels während des Verbindungsvorganges gewährleistet. An einem Ende der Verbindungshülse 6 ist ein Gewinde 27 angebracht, mit dem eine exakte Einstellung des Seilzuges und damit eine Feinjustierung der Schaltstellung über das Einstellelement ermöglicht wird. Am anderen Ende der Verbindungshülse 6 befindet sich die Einlegeöffnung 21 mit einer zylindrischen Einlegekontur 28 zur gelenkigen Aufnahme einer entsprechenden Kontur am Führungsabschnitt. Durch diese formschlüssige Verbindung wird eine in Zugrichtung feste und in seitlicher Richtung bewegliche Anbindung der Verbindungshülse an den Führungsabschnitt erreicht. Verschlossen und abgedichtet wird die Einlegeöffnung 21 durch die Schiebehülse, die in der Verschlußstellung mit ihrer elastischen Rastvorrichtung in die Rastkontur 19 am Umfang der Verbindungshülse 6 einschnappt. Alternativ zur Schnappverbindung kann auch die Schiebehülse mittels einer Feder, insbesondere einer Schraubenfeder gegen den Anlaufbund 29 geschoben bzw. dort in der Verschlußstellung gehalten werden.

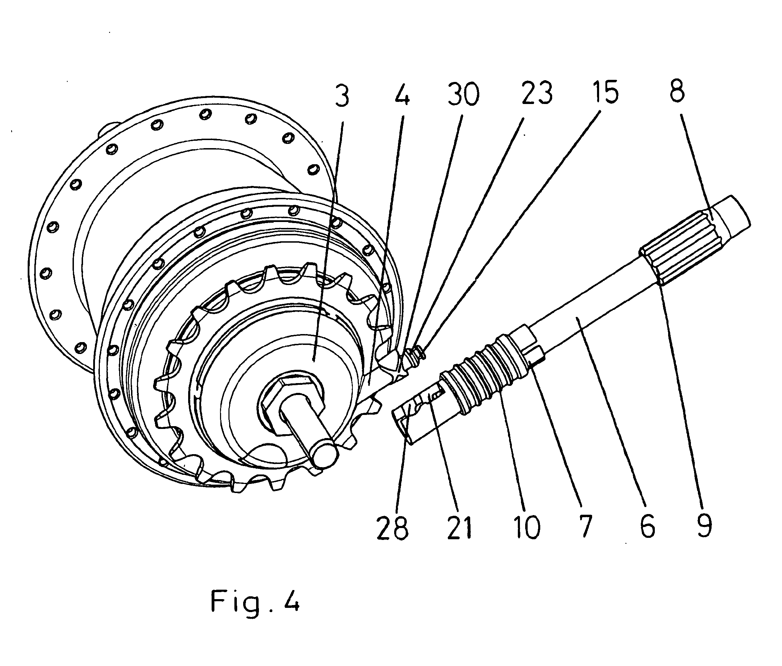

In Figur 4 wird die Seilzugverbindung im gelösten Zustand in einer 3-D-Darstellung gezeigt. Das Gehäuseteil 3 mit dem Führungsabschnitt 4 ist an der Getriebenabe 2 angeordnet. Der federvorgespannte Schaltzug hat den Schaltzugnippel 15 mit der Einhängekontur 23 und der zylindrischen Verlängerung bis zum Anschlag in die Bohrung am Führungsabschnitt 4 eingezogen, so dass nur noch die Einhängekontur 23 herausschaut. Am Führungsabschnitt 4 befindet sich eine Kontur 30 mit abgerundeten Stirnseiten, die in die Einlegekontur 28 an der Verbindungshülse 6 paßt und im montierten Zustand eine in axialer Richtung feste aber gelenkige Verbindung ergibt. Die Kontur 30 ragt über den Außendurchmesser des Führungsabschnittes 4 hinaus und ist so gestaltet, dass die Verbindungshülse 6 gegenüber dem Führungsabschnitt eine kleine Schwenkbewegung ausführen kann, ohne dass sich eine auf den Schaltweg bzw. die Schaltstellung auswirkende Längenänderung einstellt. An der Verbindungshülse 6 ist die Einlegeöffnung 21 offen und die Schiebehülse 7 mit dem Verschiebeprofil 10 befindet sich in der geöffneten Stellung. Das Einstellelement 8 mit dem Verdrehprofil 9 ist am Ende der Verbindungshülse 6 und ermöglicht die Justierung der Schalteinstellung bzw. des gesamten Schaltstranges.

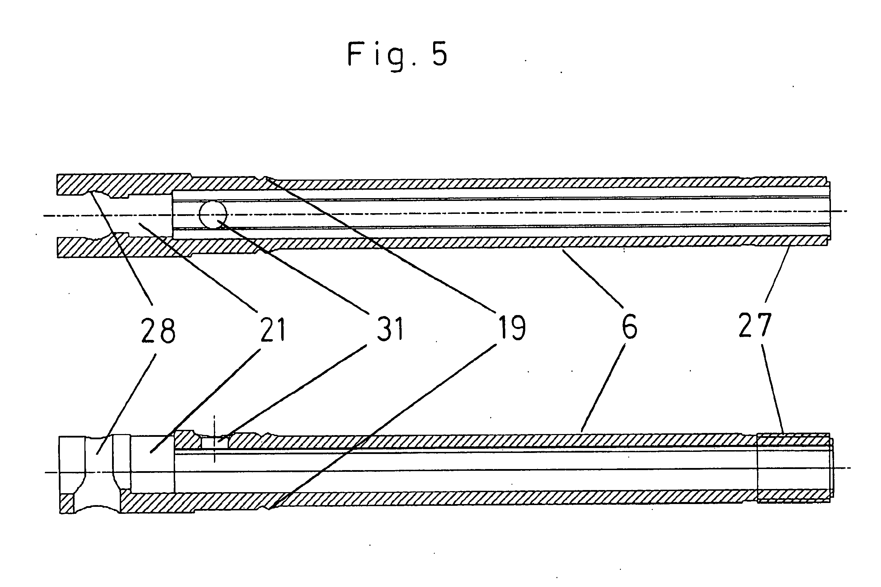

Figur 5 zeigt eine weitere Ausführung der Verbindungshülse 6 in zwei Längsschnitten. An einem Ende der Verbindungshülse 6 befindet sich das Gewinde 27, mit dem eine exakte Einstellung des Seilzuges und damit eine Feinjustierung der Schaltstellung über das Einstellelement ermöglicht wird. Über das Einstellelement bzw. das Gewinde 27 wird die Verbindungshülse 6 gegenüber der Seilzughülle soweit verstellt, bis die Klemmschraube, die den Seilzugnippel am Seilzug fixiert, oder eine andere Markierung am Seilzugnippel, voll in der Sichtöffnung 31 erscheint. Am anderen Ende der Verbindungshülse 6 befindet sich die Einlegeöffnung 21 mit einer zylindrischen Einlegekontur 28 zur Aufnahme der Kontur am Führungsabschnitt. Verschlossen wird die Einlegeöffnung 21 durch die Schiebehülse, die in der Verschlußstellung mit ihrer elastischen Rastvorrichtung in die Rastkontur 19 am Umfang der Verbindungshülse 6 einschnappt.

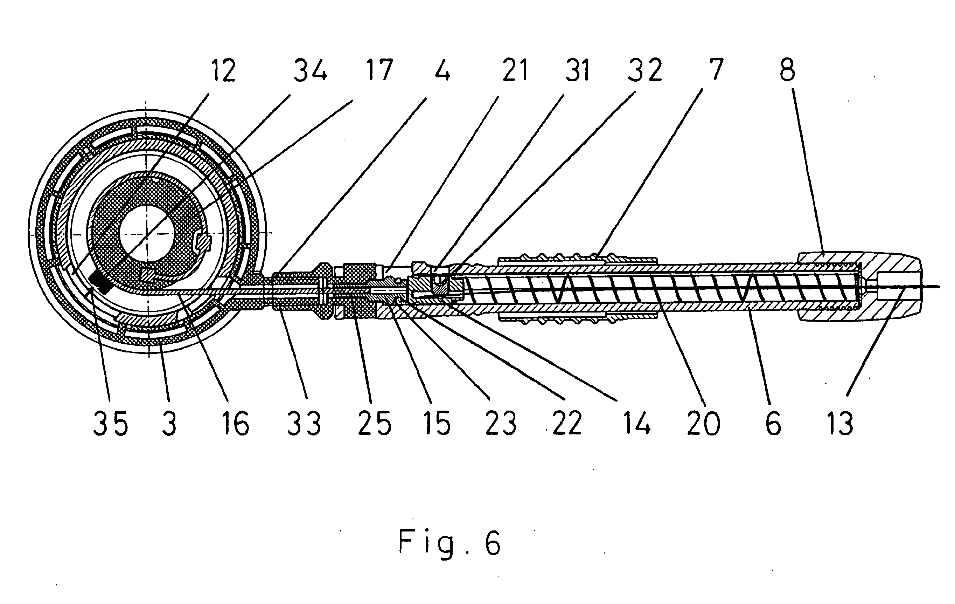

In Figur 6 wird die Seilzugverbindung mit geöffneter Einlegestellung im Längsschnitt gezeigt. Die Schaltbewegung wird durch den Seilzug 13 in die Verbindungshülse 6 eingeleitet und vom Seilzugnippel 14 auf den Schaltzugnippel 15 übertragen. Über den im Führungsabschnitt 4 geführten Schaltzug 16 wird die Schaltbewegung zur Seilspule 17 geleitet. Die Seilzughose wird vom Einstellelement 8 aufgenommen und die Seilzugspannung bzw. die exakte Schalteinstellung durch Verdrehen des Einstellelementes 8 gegenüber der Verbindungshülse 6 justiert. Die exakte Einstellung des Seilzuges ist dann erreicht, wenn die Klemmschraube 32 voll in der Sichtöffnung 31 erscheint. Die Schiebehülse 7 befindet sich in der geöffneten Position und gibt die Einlegeöffnung 21 frei. Zum Lösen der Seilzug-Nabenverbindung muß der Gang mit der geringsten Seilzugspannung, die Montage-Schaltstellung eingelegt werden. Der Seilzug 13 bzw. der Seilzugnippel 14 wird von der Druckfeder 20, die sich am Einstellelement 8 abstützt, in die Grundstellung gebracht. Auf der Gehäuseteilseite wird der federvorgespannte Schaltzug 16 bzw. der Schaltzugnippel 15 gegen einen Anschlag im Führungsabschnitt 4 gezogen und damit ebenfalls in die Grundstellung gebracht. Wie in Figur 6 gezeigt, wird die Schiebehülse 7 zurückgeschoben und die radiale Einlegeöffnung 21 an der Verbindungshülse 6 freigegeben. Die Verbindungshülse 6 mit dem Seilzugnippel 14 wird gegenüber dem Führungsabschnitt 4 bzw. dem Schaltzugnippel 15 in radialer Richtung verschoben und damit die Seilzug-Nabenverbindung getrennt. Beim Ausbau des Antriebsrades verbleibt das Gehäuseteil 3 mit der Seilspule 17 und dem Schaltzug 16 am Antriebsrad und die Verbindungshülse 6 und der Seilzug 13 am Fahrradrahmen. Damit die radiale Einlegeöffnung 21 an der Verbindungshülse 6 immer mit der radialen Fügekontur 22 des Seilzugnippels 14 übereinstimmt, ist die Innenkontur der Verbindungshülse 6 und die Außenkontur des Seilzugnippels 14 mit einem nicht runden Querschnitt, z. B. in Form eines Sechskantprofiles ausgestattet. Die radiale Fügekontur 22 am Seilzugnippel 14 und die Einhängekontur 23 am Schaltzugnippel 15 sind entsprechend aufeinander abgestimmt, so dass im zusammengefügten Zustand eine nahezu spielfreie Zugverbindung entsteht. Der Schaltzugnippel 15 besitzt neben der radial ausgeprägten Einhängekontur 23 noch eine zylindrische Verlängerung 25, die sich während des Verbindungsvorganges in der entsprechend angepaßten Bohrung im Führungsabschnitt 4 abstützt. Zur Feineinstellung ist der Führungsabschnitt 4 mit einem Verstellgewinde 33 ausgestattet. Durch Verdrehen des Führungsabschnittes gegenüber dem Gehäuseteil 3 wird der Schaltzug 16 bzw. die Seilspule 17 soweit verstellt, bis die Seilspulenmarkierung 34 der im Einstellfenster 12 erkennbaren Gehäusemarkierung 35 gegenübersteht.

### Bezugszeichenliste

- 1: Ritzel
- 2: Getriebenabe
- 3: Gehäuseteil
- 4: Führungsabschnitt
- 5: Achse
- 6: Verbindungshülse
- 7: Schiebehülse
- 8: Einstellelement
- 9: Verdrehprofil
- 10: Verschiebeprofil
- 11: Deckel
- 12: Einstellfenster
- 13: Seilzug
- 14: Seilzugnippel
- 15: Schaltzugnippel
- 16: Schaltzug
- 17: Seilspule
- 18: Schraubenfeder
- 19: Rastkontur
- 20: Druckfeder
- 21: Einlegeöffnung
- 22: Fügekontur
- 23: Einhängekontur
- 24: Innenprofil
- 25: Verlängerung
- 26: Anschlagkante
- 27: Gewinde
- 28: Einlegekontur
- 29: Anlaufbund
- 30: Kontur
- 31: Sichtöffnung
- 32: Klemmschraube
- 33: Verstellgewinde
- 34: Seilspulenmarkierung
- 35: Gehäusemarkierung

## Patentansprüche

1. Lösbare Kopplung des Seilzuges (**13**) Getriebenabe(**2**) mit integriertem System zur Erzeugung von Schaltwegen bestehend aus:
- einem Gehäuseteil (**3**) das an der Getriebenabe (**2**) angeordnet ist
- einem Schaltzug (**16**) der die Schaltbewegung in die Getriebenabe (**2**) einleitet
- einem Seilzug (**13**) mit Seilzughülle und Einstellelement (**8**) zur Übertragung der Schaltbewegung vom Betätigungselement zum Schaltzug (**16**)
- einer Verbindungsvorrichtung zur Kopplung von Schalt-(**16**)und Seilzug (**13**),
wobei die Verbindungsvorrichtung aus einem Führungsabschnitt (**4**) z. B. am Gehäuseteil (**3**) und einem Schaltzug (**16**) mit einem Schaltzugnippel (**15**) sowie aus einer Verbindungshülse (**6**) und einem Seilzug (**13**) mit einem Seilzugnippel (**14**) besteht, wobei diese Verbindungskomponenten mit einer auf die jeweilige Gegenkontur abgestimmten, radialen Einlegekontur (**28**) bzw. Fügekontur (**22**) ausgestattet sind.
**dadurch gekennzeichnet,**
**dass** der am Seilzug (**13**) befestigte Seilzugnippel (**14**), von einer Druckfeder (**20**), die sich gegenüber der Verbindungshülse **6** bzw. am Einstell element (**8**) abstützt, in Richtung einer Anschlagkante (**26**) in der Verbindungshülse (**6**) gedrückt wird.

2. Lösbare Kopplung nach Anspruch 1,
**dadurch gekennzeichnet,**
**dass** an einem Ende der Verbindungshülse (**6**) eine radiale Einlegeöffnung (**21**) für den Führungsabschnitt (**4**) und den Schaltzugnippel (**15**) vorgesehen ist.

3. Lösbare Kopplung nach Anspruch 2,
**dadurch gekennzeichnet,**
**dass** an einem Ende der Verbindungshülse (**6**) eine radiale Einlegeöffnung (**21**) und am anderen Ende ein Gewinde (**27**) zum Verstellen des Einstellelementes (**8**) vorgesehen ist.

4. Lösbare Kopplung nach Anspruch 1,
**dadurch gekennzeichnet,**
**dass** der Seilzugnippel (**14**) im Innenprofil (**24**) der Verbindungshülse (**6**) bis zu einer Anschlagkante (**26**) axial geführt ist und durch einen unrunden Querschnitt der Innenkontur der Verbindungshülse (6) und des Seilnippels (14) gegen Verdrehen gesichert wird und die Fügerichtung der Fügekontur (**22**) des Seilzugnippels und der Einlegeöffnung(**21**)der Verbindungshülse (**6**) zueinander ausgerichtet sind.

5. Lösbare Kopplung nach Anspruch 4,
**dadurch gekennzeichnet,**
**dass** der am Seilzug (**13**) befestigte Seilzugnippel (**14**), in der Schaltstellung mit der geringsten Seilzugspannung, von **der** Druckfeder (**20**), die sich am Einstellelement (**8**) abstützt, gegen die Anschlagkante (**26**) in der Verbindungshülse **6** gedrückt wird.

6. Lösbare Kopplung nach Anspruch 5,
**dadurch gekennzeichnet,**
**dass** zur Feineinstellung des Seilzuges (**13**) der Seilzugnippel (**14**) durch Verdrehen des Einstellelementes (**8**) gegenüber der Verbindungshülse (**6**) soweit verschoben wird, bis eine Markierung am Seilzugnippel (**14**) vorzugsweise die Klemmschraube (**32**), die den Seilzugnippel (**14**) am Seilzug (**13**) fixiert. voll in der Sichtöffnung (**31**) erscheint.

7. Lösbare Kopplung nach Anspruch 1,
**dadurch gekennzeichnet,**
**dass** der mittels einer Feder vorgespannte Schaltzug (**16**) den Schaltzugnippe (**15**) gegen einen Anschlag am Führungsabschnitt (**4**) zieht und ihn somit für den Koppelvorgang in einer definierten Ausgangsstellung hält.

8. Lösbare Kopplung nach Anspruch 1,
**dadurch gekennzeichnet,**
**dass** die Verbindungskomponenten in axialer Richtung steif, aber in seitlicher Richtung entsprechend weich verbunden sind, so dass die Verbindungshülse (**6**) gegenüber dem Gehäuseteil (**3**) eine Winkelbewegung ausführen kann.

9. Lösbare Kopplung nach Anspruch 8,
**dadurch gekennzeichnet,**
**dass** die Verbindung Gehäuseteil (**3**) bzw. Führungsabschnitt (**4**) mit der Verbindungshülse (**6**) als Gelenk ausgebildet ist, damit bei einer Schwenkbewegung keine wesentliche Änderung des Betätigungs- bzw. Schaltweges erfolgt.

10. Lösbare Kopplung nach Anspruch 1,
**dadurch gekennzeichnet,**
**dass** die Verbindungshülse (**6**) im Bereich der Einiegeöffnung (**21**), sowie die innen liegenden Verbindungskomponenten, von einer auf der Verbindungshülse (**6**) werschiebbaren Schiebehülse (**7**) abgedeckt, abgedichtet und verriegelt werden.

11. Lösbare Kopplung nach Anspruch 10,
**dadurch gekennzeichnet,**
**dass** die Schiebehülse (**7**) in der Verschlußstellung mittels einer elastischen Rastvorrichtung auf der Rastkontur (**19**) der Verbindungshülse (**6**) axial fixiert wird.

12. Lösbare Kopplung nach Anspruch 10,
**dadurch gekennzeichnet,**
**dass** die Schiebehülse (**7**) mittels Federkraft in die Verschlußstellung bewegt und dort gehalten wird.

13. Lösbare Kopplung nach Anspruch 1,
**dadurch gekennzeichnet,**
**dass** der Schaltzugnippel (**15**) an einem Ende mit einer radial ausgeprägten Einhängekontur (**23**) und am anderen Ende mit einer den Schaltzug (**16**) aufnehmenden Verlängerung (**25**) ausgestattet ist, die sich während des Verbindungsvorganges in einer Bohrung am Führungsabschnitt (**4**) abstützt.

14. Lösbare Kopplung nach Anspruch 1,
**dadurch gekennzeichnet,**
**dass** der Führungsabschnitt (**4**) im Endbereich mit einer Kontur (**30**) ausgestattet ist, die über den Außendurchmesser des Führungsabschnittes (**4**) hinausragt und mit der Einlegekontur (**28**) der Verbindungshülse (**6**) eine axial feste Verbindung bildet.

15. Lösbare Kopplung nach Anspruch 1,
**dadurch gekennzeichnet,**
**dass** der Führungsabschnitt (**4**) und das Gehäuseteil (**3**) zur Einstellung des Schaltzuges (**16**) über ein Verstellgewinde (**33**) verfügt und zur Justierung der Seilspule (**17**) das Gehäuseteil(**3**)im Bereich des Einstellfensters (**12**) unit einer Gehäusemarkierung (**35**) und die Seilspule (**17**) mit einer Seilspulenmarkierung (**34**) ausgestattet ist.

16. Lösbare Kopplung nach Anspruch 1,
**dadurch gekennzeichnet,**
**dass** sich die Gangjustierung bzw. die Seileinstellung des Schaltzuges (**16**) und des Seilzuges (**13**) durch Lösen und Wiederverbinden der Kopplung, ohne Verstellung am Verstellgewinde (**33**) oder am Gewinde (**27**) nicht verändert.

17. Lösbare Kopplung nach Anspruch 16,
**dadurch gekennzeichnet,**
**dass** nach gelöster Kopplung der Schaltzug (**16**) bzw. der Schaltzugnippel (**15**) durch die Federvorspannung der Seilspule (**17**) bis zum Anschlag in den Führungsabschnitt (**4**) gezogen wird bzw. am Führungsabschnitt (**4**) in definierter Montageposition anliegt.

18. Lösbare Kopplung nach Anspruch 16,
**dadurch gekennzeichnet,**
**dass** nach gelöster Kopplung der Seilzug (**13**) bzw. der Seilzugnippel (**14**) durch die Federvorspannung der Druckfeder (**20**) an der Anschlagkante (**26**) in der Verbindungshülse (**6)** anliegt und sich somit in definierter Montageposition befindet.

19. Lösbare Kopplung nach Anspruch 1,
**dadurch gekennzeichnet,**
**dass** die Verbindung zwischen Führungsabschnitt (**4**) und Verbindungshülse (**6**) als Bajonettverschluß ausgebildet ist und bei Anliegen der Schaltkraft bzw. wenn der Seilzug (**13**) unter Spannung steht, nur schwer gelöst werden kann.

## Claims

1. Detachable coupling of the pull cable (13), for example on a gear hub (2) with an integrated system for generating shifting paths, consisting of:
- a casing part (3) which is arranged on the gear hub (2),
- a shifting cable (16) which introduces the shifting movement into the gear hub (2),
- a pull cable (13) with a pull cable housing and adjustment element (8) for transmitting the shifting movement from the actuating element to the shifting cable (16)
- a connecting device for coupling the shifting cable (16) and pull cable (13),
the connecting device consisting of a guide portion (4), for example on the casing part (3) and a shifting cable (16) with a shifting cable nipple (15), and also of a connecting sleeve (6) and a pull cable (13) with a pull cable nipple (14), these connecting components being equipped with a radial insertion contour (28) or joining contour (22) adapted to the respective counter-contour, **characterized in that** the pull cable nipple (14), which is fastened to the pull cable (13), is pressed by a compression spring (20), which is supported relative to the connecting sleeve (6) or on the adjustment element (8), in the direction of a stop edge (26) in the connecting sleeve (6).

2. Detachable coupling according to Claim 1, **characterized in that** a radial insertion opening (21) for the guide portion (4) and the shifting cable nipple (15) is provided at one end of the connecting sleeve (6).

3. Detachable coupling according to Claim 2, **characterized in that** there are provided, at one end of the connecting sleeve (6), a radial insertion opening (21) and, at the other end, a thread (27) for adjusting the adjustment element (8).

4. Detachable coupling according to Claim 1, **characterized in that** the pull cable nipple (14) is axially guided in the inner profile (24) of the connecting sleeve (6) up to a stop edge (26) and is prevented from rotating by an out-of-round cross section of the inner contour of the connecting sleeve (6) and of the pull cable nipple (14), and the joining direction of the joining contour (22) of the pull cable nipple and the insertion opening (21) of the connecting sleeve (6) are oriented towards each other.

5. Detachable coupling according to Claim 4, **characterized in that** the pull cable nipple (14), which is fastened to the pull cable (13), is pressed, in the shifting position having the smallest amount of pull cable tension, by the compression spring (20), which is supported on the adjustment element (8), against the stop edge (26) in the connecting sleeve (6).

6. Detachable coupling according to Claim 5, **characterized in that**, for fine adjustment of the pull cable (13), the pull cable nipple (14) is displaced, by rotation of the adjustment element (8) relative to the connecting sleeve (6), until a marking on the pull cable nipple (14), preferably the clamping screw (32) which fixes the pull cable nipple (14) to the pull cable (13), appears fully in the viewing opening (31).

7. Detachable coupling according to Claim 1, **characterized in that** the shifting cable (16), which is pre-tensioned by means of a spring, draws the shifting cable nipple (15) against a stop on the guide portion (4) and thus holds the shifting cable nipple in a defined starting position for the coupling process.

8. Detachable coupling according to Claim 1, **characterized in that** the connecting components are connected in a rigid manner in the axial direction, but in a correspondingly soft manner in the lateral direction, so that the connecting sleeve (6) can perform an angular movement in relation to the casing part (3).

9. Detachable coupling according to Claim 8, **characterized in that** the connection of the casing part (3) or guide portion (4) to the connecting sleeve (6) is embodied as a joint, so that the actuating path or shifting path is not fundamentally changed during a pivoting movement.

10. Detachable coupling according to Claim 1, **characterized in that** the connecting sleeve (6) in the region of the insertion opening (21) and also the internal connecting components are covered, sealed and interlocked by a sliding sleeve (7) which is displaceable on the connecting sleeve (6).

11. Detachable coupling according to Claim 10, **characterized in that**, in the closure position, the sliding sleeve (7) is axially fixed on the locking contour (19) of the connecting sleeve (6) by means of a resilient locking device.

12. Detachable coupling according to Claim 10, **characterized in that** the sliding sleeve (7) is moved into the closure position and held there by means of spring force.

13. Detachable coupling according to Claim 1, **characterized in that** the shifting cable nipple (15) is equipped, at one end, with a radially formed suspending contour (23) and, at the other end, with an extension (25) which receives the shifting cable (16) and is supported, during the connecting process, in a hole on the guide portion (4).

14. Detachable coupling according to Claim 1, **characterized in that** the guide portion (4) is equipped in the end region with a contour (30) which protrudes beyond the external diameter of the guide portion (4) and forms an axially secure connection with the insertion contour (28) of the connecting sleeve (6).

15. Detachable coupling according to Claim 1, **characterized in that**, for adjusting the shifting cable (16), the guide portion (4) and the casing part (3) possess an adjustment thread (33) and, for adjusting the cable spool (17), the casing part (3) is equipped, in the region of the adjustment window (12), with a casing marking (35) and the cable spool (17) is equipped with a cable spool marking (34).

16. Detachable coupling according to Claim 1, **characterized in that** the gear adjustment or the pull cable adjustment of the shifting cable (16) and of the pull cable (13) by detaching and reconnecting the coupling does not change without adjustment on the adjustment thread (33) or on the thread (27).

17. Detachable coupling according to Claim 16, **characterized in that**, once the coupling has been detached, the shifting cable (16) or the shifting cable nipple (15) is drawn by the spring pre-tensioning of the cable spool (17) into the guide portion (4) until they abut or rests against the guide portion (4) in a defined assembly position.

18. Detachable coupling according to Claim 16, **characterized in that**, once the coupling has been detached, the pull cable (13) or the pull cable nipple (14) rests, as a result of the spring pre-tensioning of the compression spring (20), against the stop edge (26) in the connecting sleeve (6) and is thus in the defined assembly position.

19. Detachable coupling according to Claim 1, **characterized in that** the connection between the guide portion (4) and connecting sleeve (6) is formed as a bayonet closure and can be detached only with difficulty when the shifting force is applied or if the pull cable (13) is tensioned.

## Revendications

1. Raccord amovible de tirette à câble (13) de moyeu de boîte de vitesses (2) avec système intégré pour produire des voies de déplacement au changement de vitesse composé :
d'une partie de boîtier (3) disposée au niveau du moyeu de boîte de vitesses (2) ;
d'une tirette de changement de vitesse (16) qui introduit le mouvement de changement de vitesse dans le moyeu de boîte de vitesses (2) ;
d'une tirette à câble (13) dotée d'une gaine de protection de câble et d'un élément de réglage (8) pour transmettre le mouvement de changement de vitesse de l'élément d'actionnement à la tirette de changement de vitesse (16) ;
un dispositif de raccordement pour raccorder la tirette de changement de vitesse (16) et la tirette à câble (13) ;
le dispositif de raccordement étant composé d'un segment de guidage (4), disposé par exemple au niveau de la partie de boîtier (3), d'une tirette de changement de vitesse (16) avec un raccord fileté de tirette de changement de vitesse (15) ainsi que d'une gaine de raccordement (6) et d'une tirette à câble (13) avec un raccord fileté de tirette à câble (14), ces composants de raccordement étant équipés d'un contour d'insertion (28) et/ou d'un contour de joint (22) radial défini sur le contre-contour respectif ;
**caractérisé en ce que** :
le raccord fileté de tirette à câble (14) fixé au niveau de la tirette à câble (13) est comprimé dans la gaine de raccordement (6) par un ressort de compression (20) qui bute par rapport à la gaine de raccordement (6) et/ou contre l'élément de réglage (8), en direction d'un bord de butée (26).

2. Raccord amovible selon la revendication 1, **caractérisé en ce qu'**une ouverture d'insertion radiale (21) est prévue pour le segment de guidage (4) et le raccord fileté de tirette de changement de vitesse (15) au niveau d'une extrémité de la gaine de raccordement (6).

3. Raccord amovible selon la revendication 2, **caractérisé en ce qu'**une ouverture d'insertion radiale (21) est prévue au niveau d'une extrémité de la gaine de raccordement (6) et qu'un filetage (27) est prévu au niveau de l'autre extrémité pour le réglage de l'élément de réglage (8).

4. Raccord amovible selon la revendication 1, **caractérisé en ce que** le raccord fileté de tirette à câble (14) est introduit de façon axiale dans le profilé intérieur (24) de la gaine de raccordement (6) jusqu'à un bord de butée (26) et présente une sécurité anti-torsion du fait de la forme non arrondie de la section transversale du contour intérieur de la gaine de raccordement (6) et du raccord fileté de tirette à câble (14) et **en ce que** les directions d'assemblage du contour de joint (22) du raccord fileté de tirette à câble et de l'ouverture d'insertion (21) de la gaine de raccordement (6) sont alignées les unes par rapport aux autres.

5. Raccord amovible selon la revendication 4, **caractérisé en ce que** le raccord fileté de tirette à câble (14) fixé à la tirette à câble (13) est comprimé contre le bord de butée (26) par le ressort de compression (20), qui bute contre l'élément de réglage (8) au moyen de la plus petite tension de tirette à câble, dans la gaine de raccordement (6), dans la position de changement de vitesse.

6. Raccord amovible selon la revendication 5, **caractérisé en ce que** pour effectuer le réglage fin de la tirette à câble (13), le raccord fileté de tirette à câble (14) est poussé, par torsion de l'élément de réglage (8) par rapport à la gaine de raccordement (6), jusqu'à ce qu'un repère apparaisse entièrement dans l'ouverture de contrôle visuel (31) au niveau du raccord fileté de tirette à câble (14), ce repère étant de préférence la vis de serrage (32) qui fixe le raccord fileté de tirette à câble (14) à la tirette à câble (13).

7. Raccord amovible selon la revendication 1, **caractérisé en ce que** la tirette de changement de vitesse (16) précontrainte à l'aide d'un ressort tire le raccord fileté de tirette de changement de vitesse (15) contre une butée au niveau du segment de guidage (4) et le maintient ainsi dans une position de sortie définie pour le processus de raccordement.

8. Raccord amovible selon la revendication 1, **caractérisé en ce que** les composants de raccordement sont reliés de façon inflexible dans la direction axiale et de façon relativement souple dans la direction latérale, de sorte que la gaine de raccordement (6) peut s'incurver par rapport à la partie de boîtier (3).

9. Raccord amovible selon la revendication 8, **caractérisé en ce que** le raccord de la partie de boîtier (3) et/ou du segment de guidage (4) est réalisé à l'aide d'une gaine de raccordement (6) prenant la forme d'une articulation, afin qu'aucune modification essentielle de la voie d'actionnement ou de déplacement au changement de vitesse ne se produise en cas de mouvement de pivotement.

10. Raccord amovible selon la revendication 1, **caractérisé en ce que** la gaine de raccordement (6) ainsi que les composants de raccordement situés à l'intérieur sont recouverts, étanchéifiés et verrouillés par une gaine coulissante (7) pouvant être coulissée sur la gaine de raccordement (6) dans la zone de l'ouverture d'insertion (21).

11. Raccord amovible selon la revendication 10, **caractérisé en ce que** la gaine coulissante (7) est fixée de façon axiale dans la position de fermeture sur le contour d'arrêt (19) de la gaine de raccordement (6) à l'aide d'un dispositif d'arrêt élastique.

12. Raccord amovible selon la revendication 10, **caractérisé en ce que** la gaine coulissante (7) est déplacée et maintenue dans la position de fermeture par le biais d'une force élastique.

13. Raccord amovible selon la revendication 1, **caractérisé en ce que** le raccord fileté de tirette de changement de vitesse (15) est pourvu, au niveau d'une extrémité, d'un contour d'accrochage (23) visible dans le plan radial et au niveau de l'autre extrémité d'une extension (25) logeant la tirette de changement de vitesse (16), ladite extension butant contre le segment de guidage (4) se trouvant dans un alésage pendant le processus de raccordement.

14. Raccord amovible selon la revendication 1, **caractérisé en ce que** le segment de guidage (4) est doté, dans la zone d'extrémité, d'un contour (30) qui surplombe le diamètre extérieur du segment de guidage (4) et forme un raccordement fixe dans le plan axial avec le contour d'insertion (28) de la gaine de raccordement (6).

15. Raccord amovible selon la revendication 1, **caractérisé en ce que** le segment de guidage (4) et la partie de boîtier (3) disposent d'un filetage de réglage (33) pour régler la tirette de changement de vitesse (16) et **en ce que** la partie de boîtier (3) est équipée d'un repère de boîtier (35) dans la zone de la fenêtre de réglage (12) et que la bobine de câble (17) est équipée d'un repère de bobine de câble (34) pour ajuster la bobine de câble (17).

16. Raccord amovible selon la revendication 1, **caractérisé en ce qu'**en l'absence de réglage au niveau du filetage de réglage (33) ou du filetage (27), l'ajustement de rapport et/ou le réglage du câble de la tirette de changement de vitesse (16) et de la tirette à câble (13) ne varient pas lorsque le raccord est défait et refait.

17. Raccord amovible selon la revendication 16, **caractérisé en ce que** lorsque le raccord est défait, la tirette de changement de vitesse (16) et/ou le raccord fileté de tirette de changement de vitesse (15) sont tirés par la précontrainte élastique de la bobine de câble (17) jusqu'à buter dans le segment de guidage (4) et/ou reposent contre le segment de guidage (4) dans une position de montage définie.

18. Raccord amovible selon la revendication 16, **caractérisé en ce que** lorsque le raccord est défait, la tirette à câble (13) et/ou le raccord fileté de tirette à câble (14) reposent contre le bord de butée (26) prévu dans la gaine de raccordement (6) du fait de la précontrainte élastique du ressort de compression (20) et se trouvent ainsi dans une position de montage définie.

19. Raccord amovible selon la revendication 1, **caractérisé en ce que** le raccord est réalisé sous la forme d'une fermeture à baïonnette entre le segment de guidage (4) et la gaine de raccordement (6) et ne peut que difficilement être défait lorsqu'une force de changement de vitesse est appliquée et/ou que la tirette à câble (13) est placée sous tension.
